# EUROPÄISCHE PATENTANMELDUNG

(11) **EP 2 527 169 A1**
(43) Veröffentlichungstag der Anmeldung: **28.11.2012**
(21) Anmeldenummer: 11004326.2
(22) Anmeldetag: 26.05.2011
(51) Int. Cl.: B60D 1/46

(54) **Höhenverstellbare Anhängerkupplung insbesondere für Nutzfahrzeuge**

(71) Anmelder: Rheinmetall MAN Military Vehicles GmbH, 1230 Wien (AT)
(72) Erfinder: Theil, Norbert, 1080 Wien (AT)
(74) Vertreter: Dietrich, Barbara

(57) **Zusammenfassung**

Vorgeschlagen wird eine Vorrichtung (1), die sehr einfach aufgebaut ist und aus einer vorzugsweise vorderseitigen Kupplungsplatte (3) und einer vorzugsweise hinterseitigen und bevorzugt mittig eingebundenen höhenverstellenden Einrichtung (4) besteht, beispielweise einer Spindel. An der Kupplungsplatte (3) ist eine Anhängerkupplung (2) angebracht, die ihrerseits durch das Höhenverstellen der Kupplungsplatte (3) in der Höhe verstellt werden kann. Die Kupplungsplatte (3) selbst wird in / über eine Führung (6) bzw. beidseitigen Führungsrahmen (7, 8) gehalten / geführt. Das Verstellen der Kupplungsplatte (3) und damit der daran befestigten Anhängerkupplung (2) erfolgt über den Spindelantrieb (4).

## Beschreibung

Die Erfindung beschäftigt sich mit einer Höhenverstellbarkeit einer Anhängerkupplung insbesondere von bzw. für Nutzfahrzeuge(n).

Die DE 20 2010 003 686 U1 beschreibt eine Anhängerkupplung mit einem hakenförmig gekrümmten Kugelhals, dessen eines Ende mit der Anhängerkupplung versehen ist. Die DE 20 2009 015 075 U1 zeigt ihrerseits einen möglichen Einsatz auf, nämlich an einem PKW. Zusatzvorrichtungen für eine derartige Anhängerkupplung sind der DE 20 2009 006 846 U1 entnehmbar. Derartige Kugelkopf-Anhängerkupplungen sind mit den zu ziehenden Lastenanhängern etc. insbesondere in ihrer Höhe aufeinander abgestimmt und standardisiert. Bei höheren Fahrzeugen werden die Anhängerkupplungen derart angebracht, dass sie sich in der entsprechenden Höhe befindet.

Für Nutzfahrzeuge werden in der Regel ebenfalls Kugelkopf-Anhängerkupplungen eingesetzt. Hier besteht jedoch das Problem, dass es mehrere Anhängervarianten mit unterschiedlichen Deichselhöhen auch aufgrund verschiedener Fahrzeugausführungen der Nutzfahrzeuge gibt.

Es ist die Aufgabe der Erfindung, eine Vorrichtung aufzuzeigen, mit der alle möglichen Anhängervarianten mit den unterschiedlichen Deichselhöhen aufzuzeigen.

Gelöst wird die Aufgabe durch die Merkmale des Patentanspruchs 1. Vorteilhafte Ausgestaltungen sind in den Unteransprüchen enthalten.

Der Erfindung liegt die Idee zugrunde, die Anhängerkupplung für derartige Nutzfahrzeuge in der Höhe bevorzugt stufenlos zu verstellen, um so die verschiedenen Deichselhöhen ausgleichen zu können.

Aus dem Stand der Technik sind verschiedene, in ihrer Höhe verstellbare Anhängerkupplungen aus dem landwirtschaftlichen Bereich bekannt. So beschreibt die EP 0 155 338 A1 eine höhenverstellbare Anhängerkupplung für eben landwirtschaftliche Fahrzeuge, mit einem Kupplungsmaulträger, an dem ein Kupplungsmaul befestigt ist und in vertikalen Führungsschienen am Fahrzeug geführt ist. Um mit weniger Elementen auszukommen, ist eine Schwenkplatte zur Verstellung der Riegel zwischen deren Vierregelungsstellung und deren Entriegelungsstellung etwa in der Ebene der Riegel angeordnet.

Die EP 0 294 509 A1 offenbart eine höhenverstellbare Anhängerkupplung, ebenfalls für landwirtschaftliche Fahrzeuge, bei dem ein zu befestigender Anhängerblock in zwei parallelen Führungsschienen höhenverstellbar geführt ist. Nach dem Stand der Technik ist jeder Führungsschiene ein gesonderter Kraftantrieb in Form eines Hydraulikzylinders zugeordnet. Als Alternative wird daher der Einsatz von Spindelantrieben angesehen. Der Einsatz von nur einer Spindel wird ausgeschlossen, da dies die Benutzung einer Zapfwelle ausschließen würde.

Auch die EP 0 401 404 befasst sich mit einer höhenverstellbaren Anhängerkupplung, geführt in vertikalen Führungsschienen. Die EP 1 386 761 A1 rundet diese höhenverstellbaren Anhängerkupplungen ab.

Die mit der DE 60 2006 000 600 T2 (EP 1 683 659 B1) aufgezeigte Anhängerkupplung zeichnet sich dadurch aus, dass zwar auch hier zwei Führungswangen verwendet werden, die eine lösbar im unteren Endbereich der Führungswangen horizontal angeordnete Trägerplatte aufnehmen, jedoch sind auf der Trägerplatte zwei unterschiedliche Kupplungselemente vorgesehen, die durch die Trägerplatte in die aktive Kupplungsposition gebracht werden können.

All die vorgenannten Varianten sind konstruktiv sehr aufwändig. Zudem lassen sie sich nicht nachrüsten.

Daher wird nunmehr eine höhenverstellbare Vorrichtung - Anhängerkupplung - am Fahrzeug installiert, die ohne größeren Aufwand bei bestehenden Fahrzeugen nachgerüstet werden kann und die als weiteren Vorteil eine höhere Stützlast im Vergleich zu den derzeit angebauten Konstruktionen besitzt. Wenn kein Anhänger gezogen wird, kann die Kupplung durch die Vorrichtung hochgefahren werden, sodass der Überhangwinkel nicht beeinträchtigt wird. Das erhöht die Mobilität und Geländegängigkeit des Fahrzeuges.

Die Vorrichtung ist sehr einfach aufgebaut und besteht aus einer vorzugsweise vorderseitigen Kupplungsplatte und einer vorzugsweise hinterseitigen und bevorzugt mittig eingebundenen höhenverstellenden Einrichtung, wie beispielweise einer Spindel. An der Kupplungsplatte ist eine Anhängerkupplung angebracht, die ihrerseits durch das Höhenverstellen der Kupplungsplatte in der Höhe verstellt werden kann. Die Kupplungsplatte selbst wird in / über eine Führung bzw. beidseitigen Führungsrahmen gehalten / geführt. Das Verstellen der Kupplungsplatte und damit der daran befestigten Anhängerkupplung erfolgt über die Spindel bzw. den Spindelantrieb.

Anhand eines Ausführungsbeispiels mit Zeichnung soll die Erfindung näher erläutert werden. Es zeigt:
- Fig. 1: eine Ansicht von vorne und hinten auf die Vorrichtung mit eingefahrener Anhängerkupplung,
- Fig. 2: eine Ansicht von vorn und hinten auf die Vorrichtung mit ausgefahrener Anhängerkupplung,

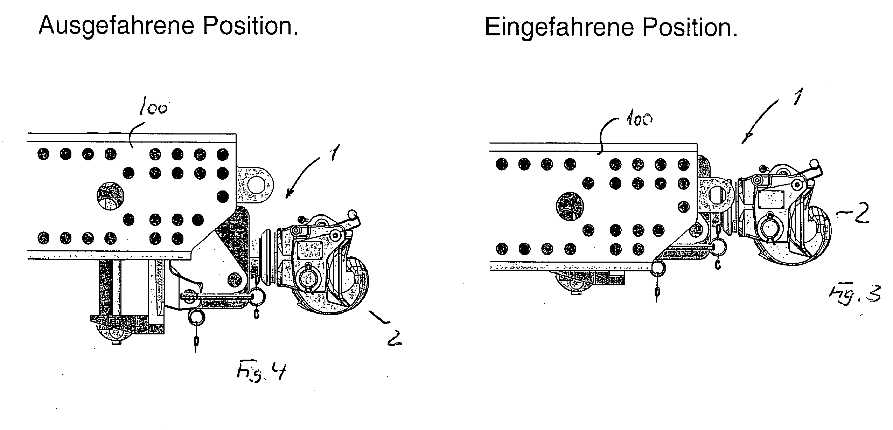

- Fig. 3: eine seitliche Darstellung der Vorrichtung mit eingefahrener Anhängerkupplung,
- Fig. 4: eine seitliche Darstellung der Vorrichtung mit ausgefahrener Anhängerkupplung.

Die Figuren zeigen in ihrer Gesamtheit eine Vorrichtung 1 für eine höhenverstellbare Anhängerkupplung 2. Die Vorrichtung 1 umfasst eine Kupplungsplatte 3 sowie wenigstens eine Spindel 4 oder dergleichen, wie Pneumatikzylinder etc., die an / in einem hinteren Rahmen bzw. Gestell 5 gelagert bzw. geführt ist. In der einfachsten Ausführung wird eine Spindel 4 verwendet, die mittig angeordnet ist. Die Kupplungsplatte 3 wird ihrerseits in einem Führungsrahmen 6 bzw. zwei Führungen 7, 8 gehalten und geführt. Die Kupplungsplatte 3 ist anstelle einer sonst eingebauten Anhängerkupplung am Fahrzeug 100 angebunden und weist mit der Anhängerkupplung 2 vom Fahrzeug (nicht näher dargestellt) weg. Die Spindel 4 ist auch in Hinsicht ihres Schutzes innerhalb dieser Vorrichtung 1 installiert. Als Verbindung sowie um ein Verkanten zu vermeiden, sind zwei Streben bzw. Führungen 9, 10 vorgesehen, die parallel zur Spindel 4 angeordnet sind und ebenfalls im Rahmen 5 gelagert bzw. geführt werden.

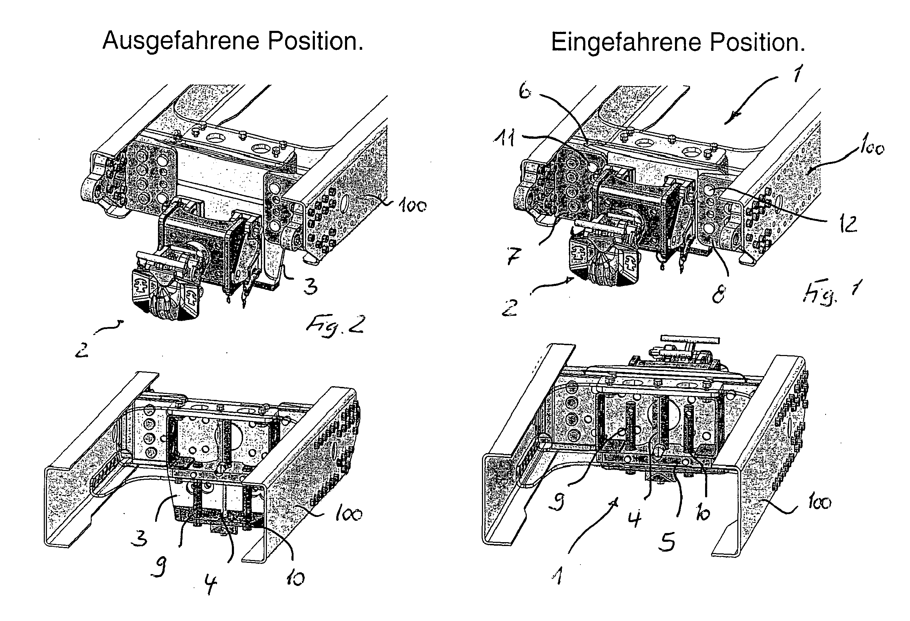

Zur Einstellung verschiedener Höhen bzw. zur Anpassung der Kupplung 2 auf die unterschiedlichen Deichselhöhen der nicht näher dargestellten Lastanhänger dient die Spindel 4. Die Fig. 1, 2 als auch 3 und 4 zeigen die durch die Spindel 4 einstellbaren Endzustände, vollständig ausgefahren und vollständig eingefahren. Die Spindel 4 bzw. der Spindelantrieb ist so ausgestaltet, dass diese auch in Zwischenpositionen entsprechend der Deichselhöhe des Gegenlagers verharren könnte.

Es versteht sich, dass auch die Einbauhöhe der Vorrichtung 1 selbst variabel ist. So besteht die Möglichkeit, durch in unterschiedlicher Höhe innerhalb der Führungsrahmen 6, 7 eingebrachte Bohrungen 11, 12 die Vorrichtung 1 von vornherein höher oder tiefer zu setzen.

## Patentansprüche

1. Anhängerkupplung (2) für insbesondere Nutzfahrzeuge, **dadurch gekennzeichnet, dass** die Anhängerkupplung (2) höhenverstellbar am Fahrzeug angebracht ist, wobei die Anhängerkupplung (2) an einer Kupplungsplatte (3) einer Vorrichtung (1) angebracht ist, die ihrerseits innerhalb der Vorrichtung (1) vertikal verschoben werden kann.

2. Anhängerkupplung nach Anspruch 1, **dadurch gekennzeichnet, dass** Kupplungsplatte (3) in einem Führungsrahmen (6) oder innerhalb von zwei Führungen (7, 8) gehalten und geführt wird.

3. Anhängerkupplung nach Anspruch 1 oder 2, **dadurch gekennzeichnet, dass** wenigstens eine Spindel (4) oder dergleichen, beispielsweise ein Pneumatikzylinder, zur Höhenverstellung der Kupplungsplatte (3) an / in einem hinteren Rahmen bzw. Gestell (5) der Vorrichtung (5) gelagert bzw. geführt ist.

4. Anhängerkupplung nach Anspruch 3, **dadurch gekennzeichnet, dass** eine Spindel (4) verwendet wird, die mittig angeordnet ist.

5. Anhängerkupplung nach einem der Ansprüche 3 oder 4, **dadurch gekennzeichnet, dass** zwei Streben bzw. Führungen (9, 10) vorgesehen sind, die parallel zur Spindel (4) angeordnet sind und ebenfalls im Rahmen (5) gelagert bzw. geführt werden.

6. Anhängerkupplung nach einem der Ansprüche 3 bis 5, **dadurch gekennzeichnet, dass** die Spindel (4) die Kupplungsplatte (3) mit Anhängerkupplung (2) in einstellbaren Zustände verbringt, so dass diese in vollständig ausgefahren, vollständig eingefahren als auch in Zwischenpositionen entsprechend der Deichselhöhe des Gegenlagers verharren können.

7. Anhängerkupplung nach einem der Ansprüche 1 bis 6, **dadurch gekennzeichnet, dass** die Einbauhöhe der Vorrichtung (1) selbst variabel ist, wozu innerhalb der Führung (6) bzw. der Führungsrahmen (7, 8) in verschiedenen Höhen eingebrachte Bohrungen (11, 12) vorgesehen werden können.
